# EUROPEAN PATENT SPECIFICATION

(11) **EP 0 731 603 B1**
(45) Date of publication and mention of the grant of the patent: **31.07.2002**
(21) Application number: 96103582.1
(22) Date of filing: 07.03.1996
(51) Int. Cl.: H04N 5/74, H04N 9/31

(54) **Video projection type display device**
Videoprojektionsanzeigesystem
Dispositif d'affichage vidéo à projection

(30) Priority: 08.03.1995 JP 4874995
(43) Date of publication of application: 11.09.1996
(73) Proprietor: SEIKO EPSON CORPORATION, Tokyo 163 (JP)
(72) Inventor: Aruga, Syuji, Suwa-shi, Nagano-ken, 392 (JP); Horiguchi, Hirosada, Suwa-shi, Nagano-ken, 392 (JP)
(74) Representative: Hoffmann, Eckart, Dipl.-Ing.

(56) References cited:
- EP-A- 0 295 913
- PATENT ABSTRACTS OF JAPAN vol. 18, no. 387 (P-1773), 20 July 1994 & JP 06 110055 A (MATSUSHITA)
- PATENT ABSTRACTS OF JAPAN vol. 17, no. 643 (P-1651), 29 November 1993 & JP 05 210097 A (CASIO COMPUT CO LTD)
- PATENT ABSTRACTS OF JAPAN vol. 16, no. 377 (P-1401), 12 August 1992 & JP 04 119323 A (SHARP)
- PATENT ABSTRACTS OF JAPAN vol. 16, no. 436 (P-1419), 11 September 1992 & JP 04 151193 A (SHARP)
- PATENT ABSTRACTS OF JAPAN vol. 15, no. 268 (P-1224), 8 July 1991 & JP 03 089316 A (CANON)

## Description

This invention relates to a projection-type display device comprising light source means, light modulation means by which a light beam emitted from the light source means is modulated in accordance with a video signal, and an optical projection system by which the modulated light beam is projected on a screen in an enlarged fashion.

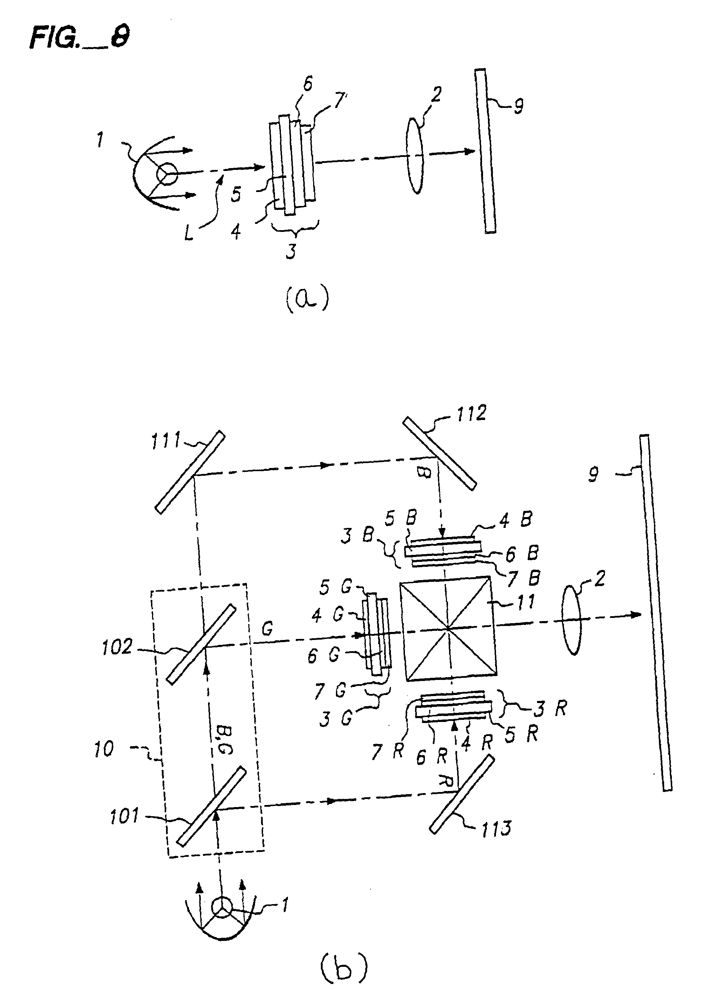

Today, research in practical usage of such a projection-type display device (simply referred to as "display device" in the following) is on the way. A display device which uses a liquid crystal panel as light valve in the light modulation means and which has a λ/4 plate between the liquid crystal panel and the optical projection system is described in the document JP-A-5-210097. Fig. 8(a) shows the configuration of the optical system of this conventional display device wherein the light modulation means comprises a single light modulation unit 3 using a liquid crystal panel. In Fig. 8(a), a light beam emitted from a light source lamp 1 passes through a light modulation unit 3, comprising an input-side polarizing plate 4, a liquid crystal panel 5, and an output-side polarizing plate 6. In the light modulation unit 3, the light beam is modulated in accordance with a video signal in the liquid crystal panel 5, and then passes through the output-side polarizing plate 6 to be linearly polarized. The light beam leaving the polarizing plate 6 enters a λ/4 plate 7 which is disposed in such a manner that the direction of its slow axis is angularly offset by 45 degree with regard to that of the light transmission axis of the output-side polarizing plate 6. Then the light beam which passed the λ/4 plate 7 is projected on a screen 9 in enlarged fashion by an optical projection system 2. On the other hand, part of the light beam which is reflected at the interface between the output side of the λ/4 7 plate and air passes the λ/4 plate 7 again in the opposite direction to result in a linearly polarized light beam whose polarizing direction is offset by 90 degree with respect to that of the light transmission axis of the output-side polarizing plate 6. Therefore, this reflected light beam is absorbed by the output-side polarizing plate 6, not returning back to the liquid crystal panel.

Fig. 8(b) shows a configuration of the optical system of a conventional display device wherein the light modulation means comprises three light modulation units 3R, 3G, and 3B each generally configured like the light modulation unit 3 explained above and followed by a respective λ/4 plate 7R, 7G, and 7B, respectively. In Fig. 8(b), the light beam emitted from the light source lamp 1 is separated into three light beams corresponding to the three primary colors red, green, and blue by means of a color separation system 10 which includes dichroic mirrors 101 and 102. Then, the three light beams are made to impinge onto the light modulation units 3R, 3G, and 3B, respectively, by means of mirrors 111, 112, and 113. In each light modulation unit 3R, 3G, and 3B, the light beam of the respective color is modulated in accordance with a video signal by the respective liquid crystal panel 5R, 5G and 5B. The modulated light beams pass through the respective output-side polarizing plate 6R, 6G and 6B to be become linearly polarized light beams, and impinge onto the respective λ/4 plate 7R, 7G, 7B which is disposed in the same manner as mentioned above for λ/4 plate 7. Then the light beams which passed the λ/4 plates 7R, 7G and 7B, respectively, are recombined by a light combining system 11, and are then projected on the screen 9 in enlarged fashion by the optical projection system 2. On the other hand, parts of the light beams which are reflected at the interfaces between the output side of the λ/4 plate 7R, 7G and 7B, respectively, and air pass the λ/4 plate 7R, 7G and 7B again in the opposite direction to result in linearly polarized light beams whose polarizing direction is offset by 90 degree with respect to that of the light transmission axis of the output-side polarizing plate 6R, 6G and 6B. Therefore, these reflected light beams are absorbed by the output-side polarizing plates 6R, 6G and 6B, not returning back to the liquid crystal panel.

In the conventional display device described above, the λ/4 plates 7, 7R, 7G, 7B are effective to prevent reflected light from re-entering a liquid crystal panel where it otherwise could cause malfunctions. On the other hand, the light beams which passed the light modulation units 3, 3R, 3G and 3B, in other word, the light beams which are projected on the screen 9, are circularly polarized, because they passed the λ/4 plate 7, 7R, 7G or 7B. However, as will be explained below, it is preferable that the light beam projected on the screen or the light beams entering the light combining system 11 are linearly polarized.

First, the case in which the light beam entering the light combining system is circularly polarized is described. Generally a dichroic prism having a wavelength selectivity is used for the light combining system, and usually the dichroic prism has wavelength selectivity for either the S- or the P-polarized component, because it is difficult to produce it so that it has both types of selectivity. Therefore, if the light combining system is made most suitable for an S-polarized component in the conventional example described above, an S-polarized component of the light beam emitted from the light modulation unit 3R is reflected by a red reflecting film to be conducted to the optical projection system, but a part of a P-polarized component passes through the red reflecting film. As a result, the passing component of the red light beam impinges on the light modulation unit 3B which is disposed facing the light modulation unit 3R via the light combining system 11. The same result is obtained with the other light modulation units 3G and 3R.

Second, the case in which the light beam entering the optical projection system, that is, the light beam projected on a screen is circularly polarized is described. Generally speaking, as a room lighting is normally disposed on the ceiling, reflected light of P-polarized direction tends to be more apparent compared with that of S-polarized direction. Therefore, a polarization screen which has a function to absorb light of P-polarized direction is normally employed. However, if the light beam projected on the screen is circularly polarized, the P-polarized component of not only the light of a room lighting but also of the light beam projected on a screen will be absorbed by the polarization screen. This causes the problems that the intensity of the light beam projected on the screen is substantially reduced and the brightness of a picture is diminished. Therefore, it is preferable that the light beam projected on the screen or the light impinging onto the light combining system is linearly polarized.

A projection-type display device according to the prior art portion of claim 1 is disclosed in JP-A-04-151193. In this pior art the polarized light beam at the output side of the first phase plate has a transmission axis of 45° to the horizontal direction. The second phase plate is a λ/4 plate employed to rotate the polarization direction of the linearly polarized light into the vertical direction.

The purpose of the invention is to provide a projection-type display device wherein a light beam reflected by the interface between a polarizing plate or a λ/4 plate and air is prevented to re-enter a liquid crystal panel, while a light beam projected on a screen or light entering a light combining system is linearly polarized, so as to obtain a display device which has good display characteristics.

This object is achieved with a projection-type display device as claimed in claim 1. Preferred embodiments of the invention are subject-matter of the dependent claims.

Preferred embodiments of the invention and advantages and effects achieved by the invention will be described in detail below with reference to the drawings in which like reference symbols refer to like parts.
- Fig. 1: is a diagram for explaining the effects of this invention.
- Fig. 2(a) and (b): shows phase changes of differently polarized light components.
- Fig. 3 to 7: illustrate the optical system of display devices according to a first to fifth embodiment of the invention.
- Fig. 8(a): shows a conventional projection-type display device using one light modulation unit.
- Fig. 8(b): shows a conventional projection-type display device using three light modulation units.

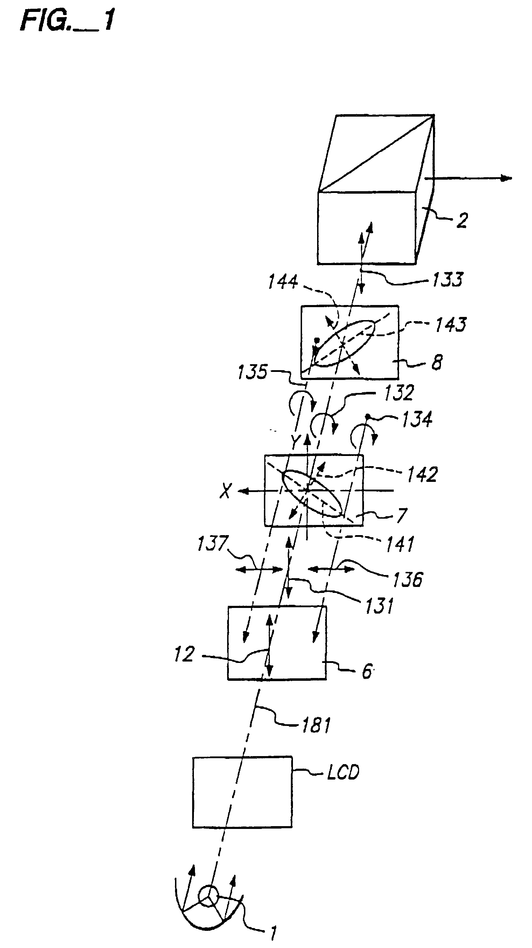

A first embodiment of the invention will now be explained in detail with reference to Figs. 1 to 3.

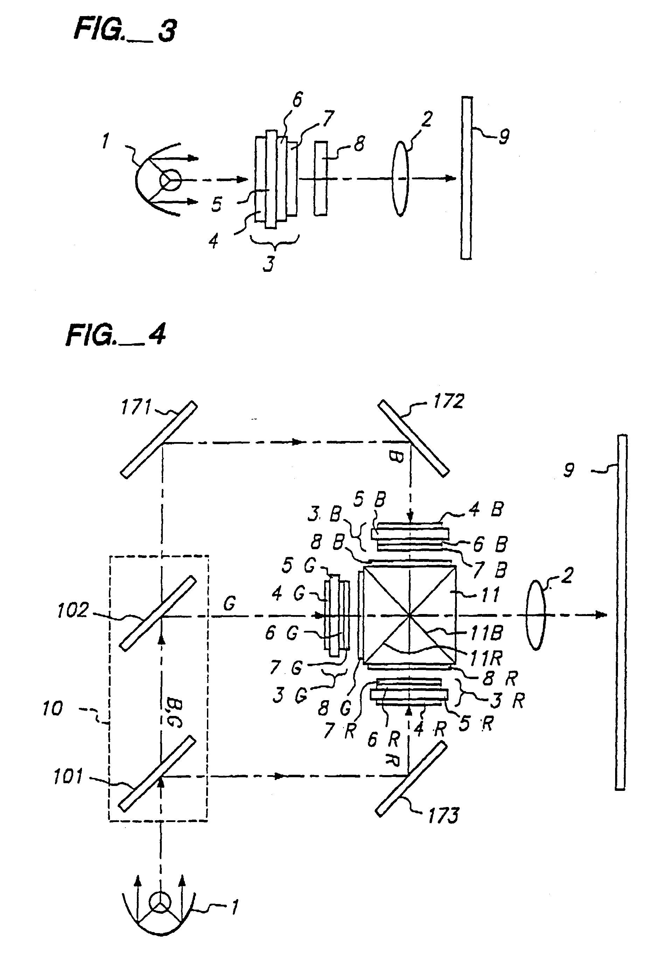

Fig. 3 shows the optical system of a display device according to a first embodiment of the invention, which has a single light modulation unit. The light modulation unit 3 is disposed in the path of a light beam emitted from the light source 1, which may be metal halide lamp. The light modulation unit 3 comprises the liquid crystal panel 5 disposed between the input-side and output-side polarizing plates 4 and 6 and is followed by a first phase plate 7. The liquid crystal panel 5 may either be a color panel or a monochrome panel depending on whether a color image is to be projected or a monochrome image. The polarizing plate 6 is preferably disposed in such a manner in that the direction of its light transmission axis is the same as that of an S-polarized component of the light beam. The first phase plate 7 is disposed optically stuck to the output side of the polarizing plate 6, i.e., the side remote from the liquid crystal panel 5. A second phase plate 8 is disposed on the output side of the first phase plate 7. A single-axis ductile film forming a λ/4 plate may be employed for the first phase plate 7 and the second phase plate 8. The first phase plate 7 is preferably disposed such that the direction of its slow axis is offset by 45 degree with respect to that of the light transmission axis of the polarizing plate 6, and the second phase plate 8 is preferably disposed so that the direction of its slow axis is offset by 90 degree with respect to that of the first phase plate 7. "Slow axis" means a direction of a phase plate having a relatively high refractive index, and "fast axis" means a direction of the phase plate having a relatively low refractive index. The fast axis is perpendicular to the slow axis. The optical projection system is disposed on the output side of the second phase plate 8.

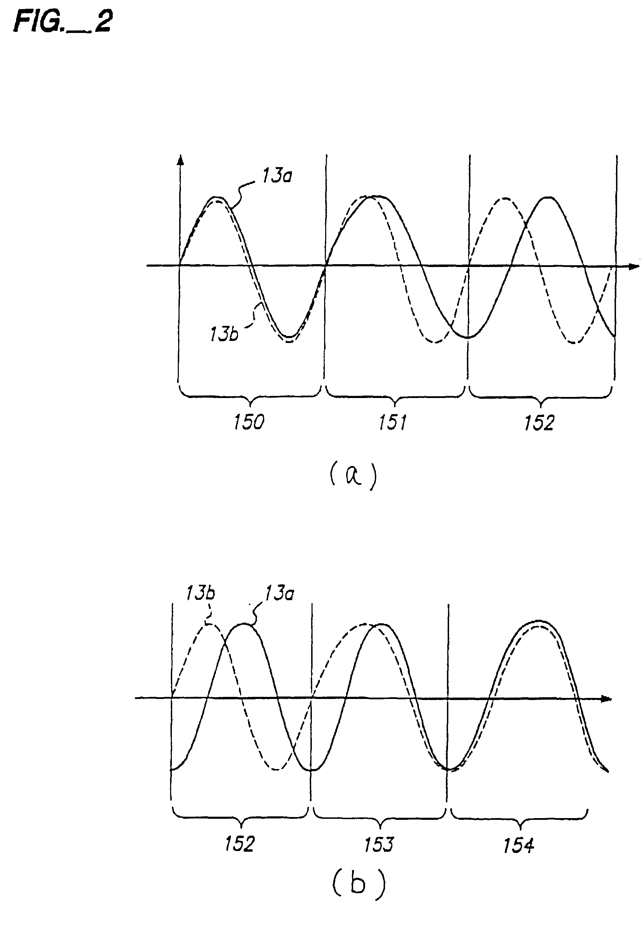

For explaining the effect of the invention reference is made to Fig. 1 and Figures 2(a) and (b). In Fig. 1, a light beam 181 emitted from the light source 1 is modulated by the liquid crystal panel LCD and then linearly polarized by passing through the output-side polarizing plate 6 whose light transmission axis is vertical in the figure so that the polarizing direction 131 is vertical, too. When the linearly polarized light beam passes through the first phase plate 7, which is arranged as mentioned above, the phase of a first component of the beam whose oscillation plane contains the slow axis 141 of the first phase plate 7 is delayed by 1/4 wavelength compared with that of a second component whose oscillation plane contains the fast axis 142 of the first phase plate 7. As a result, the light beam 132 which is emitted from the first phase plate 7 is circularly polarized. Fig. 2(a) shows the phase changes of the two components of the light beam as it passes through the first phase plate 7 . The vertical axis shows the amplitude of the light components and the horizontal axis shows the time. The solid line 13a represents the first component , the broken line 13b represents the second component, 150 indicates the period in which the light beam passes from the polarizing plate 6 to the first phase plate 7, 151 indicates the period in which the light beam passes through the first phase plate 7 from the side of the polarizing plate 6, and 152 indicates the period in which the light beam passes from the first phase plate 7 to the second phase plate 8.

When the light beam 132 that has been circularly polarized by passing through the first phase plate 7, passes through the second phase plate 8 which is arranged as mentioned above, the phase of the second component 13b of the beam, whose oscillation plane contains the slow axis 143 of the second phase plate 8 and the fast axis 142 of the first phase plate 7, is delayed by 1/4 wavelength compared with that of the first component 13a whose oscillation plane contains the fast axis 144 of the second phase plate 8 and the slow axis 141 of the first phase plate 7. As a result the light beam 133 which is emitted from the second phase plate 7 is linearly polarized, having the same direction of polarization as the light beam 131 after passing through the polarizing plate 6. Fig. 2(b) shows phase changes of the two components of the light beam as it passes through the second phase plate. Again, the vertical axis shows the amplitude of the light components and the horizontal axis shows the time. The solid line 13a represents the first component whose oscillation plane contains the fast axis 144 of the second phase plate 8, the broken line 13b represents the second component whose oscillation plane contains the slow axis 143 of the second phase plates 8, 152 indicates the period in which the light beam passes from the first phase plate 7 to the second phase plate 8, 153 indicates the period in which the light beam passes through the second phase plate 8 from the side of the first phase plate 7, and 154 indicates the period in which the light beam passes from the second phase plate 8 to the optical projection system 2. The light reflected at an interface between the output side of the first and input side of the second phase plate and air are considered. Light beams 134, 135 reflected by interfaces between the output side of the first phase plate 7 and air and the input side of the second phase plate 8 and air, respectively, pass through the first phase plate 7 in the opposite direction. Theses light beams are then absorbed by the polarizing plate 6 and do not return back to the liquid crystal panel LCD, because they are linearly polarized light beams whose polarizing axis is perpendicular to the light transmission axis of the polarizing plate 6.

While a λ/4 plate is preferable, the first and second phase plates applied in the invention are not limited to λ/4 plates, and any other means can be used to reduce or prevent the reflected light from re-entering the liquid crystal panel so long as it is capable of appropriately shifting the phases of the components of the light beam relative to each other. Also, the configuration in which the polarizing plate 6 and the first phase plate 7 are optically stuck together contributes to preventing reflected light from coming back into the liquid crystal panel, because there is no polarizing plate/air interface. According to the above described invention, a light beam reflected by the optical projection system and the like can be prevented from re-entering into the liquid crystal panel, and since the light beam projected on the screen from the optical projection system is linearly polarized, a polarization screen can be employed. By this it becomes possible to cut the amount of light from a room lighting, which is reflected by a screen to half and yet to reflect a light beam projected on the screen effectively. That is, if the light beam projected on the screen from the optical projection system is S-polarized and the polarization screen which absorbs light of P-polarized direction is employed, light from a room lighting disposed on a ceiling, which is of the P-polarized direction can be absorbed, and it becomes possible to absorb the light from the room lightning most effectively. Therefore, a display device incorporating the present invention does not suffer from errors in function and has a good color reproducibility that enables high contrast.

Fig. 4 shows the optical system of a second embodiment of the invention. This embodiment uses three light modulation units 3R, 3G and 3B each associated with first and second phase plates. The structure of each of the light modulation units 3R, 3G and 3G and that of the phase plates 7R, 8R, 7G, 8G, 7B and 8B is substantially the same as that of the light modulation unit 3 and the phase plates 7 and 8 of the first embodiment and the same reference numerals appended by a letter referring to the respective color are used to denote corresponding elements. In this case, however, the liquid crystal panels 5R, 5G and 5B are monochrome panels. A color separation system 10 comprising two dichroic mirrors 101 and 102 is provided to separate the light beam emitted from the light source 1 into three light beams corresponding to the primary colors red, green and blue. Mirror 101 disposed in the path of the light beam from the light source reflects red light while transmitting green and a blue light. Mirror 102 disposed in the path of the green and blue light beams transmitted by mirror 101, reflects green light and transmits blue light. Mirrors 171, 172 and 173 are disposed to deflect the blue and red light beams, so that the light beams of the three primary colors red, green, and blue are conducted to the light modulation units 3R, 3G and 3B, respectively. A light combining system 11 is disposed on the output side of the second phase plates 8R, 8G and 8B, and the optical projection system is disposed on the output side of the combining system to receive the recombined light beams.

The effect of the invention when applied to a display device having multiple light modulation units corresponding to multiple colors will be explained in detail below. The light beam emitted from the light source 1 is divided into light beams of the three primary colors red, green, and blue by means of the color separation system 10. Then each light beam is applied to a respective one of light modulation units 3R, 3G and 3B to be modulated in the respective liquid crystal panels 5R, 5G or 5B in accordance with a *respective one of RGB color* video signals. After that, the light beams pass through the output-side polarizing plates 6R, 6G and 6B, and are emitted as linearly polarized light beams. The modulated light beams pass through the first phase plates 7R, 7G and 7B thereby becoming circularly polarized light beams which are then emitted toward the second phase plates 8R, 8G and 8B. Upon passing through the second phase plates 8R, 8G and 8B the light beams become linearly polarized again and are then made to impinge onto the light combining system 11.

A dichroic prism is preferably used for the light combining system 11, however, as mentioned above, generally it is difficult to produce a dichroic prism so that it has both S- and P wavelength selectivity. Therefore, usually the dichroic prism is made so that it has wavelength selectivity for either the S- or P-polarized component. According to the present invention, the light beams reaching the light combining system 11 are linearly polarized and the dichroic prism 11 has the wavelength selectivity for a light beam whose direction of polarization is the same as that of the linearly polarized light beams. As a result, the blue light beam is prevented from passing through the blue reflecting film 11B.

On the other hand, a light beam reflected at interfaces between the output side of the first phase plates 7R, 7G and 7B or the input side of the second phase plates 8R, 8G and 8B and air passes through the first phase plates 7R, 7G and 7B in the opposite direction. For the same reason as explained above, such reflected light beams are, however, absorbed by the output-side polarizing plates 6R, 6G and 6B and do not return back to the liquid crystal panel. In this case, if the first and second phase plates are λ/4 plates, and if the first phase plates 7R, 7G and 7B have the direction of their slow axis offset by 45 degree with respect to that of the light transmission axis of the polarizing plates 6R, 6G and 6B, parts of the light beams impinging on the light combining system 11, which are reflected at the light entrance surface of the light combining system 11 and return back to the polarizing plates 6R, 6G and 6B are completely linearly polarized. Therefore, a display device is obtained which prevents a device from errors in function and has good color reproducibility that enables high contrast.

If the first and second phase plates are disposed so that the direction of their slow axis is offset by 90 degree with respect to each other, the polarizing direction of the light beam impinging onto the light combining system 11 is the same as that of the light transmission axis of the polarizing plates 6R, 6G and 6B.

It is preferable that the light modulation unit and the first and the second phase plates are disposed so that the polarizing direction of the light beams of each color which impinge onto the light combining system is the same. Using the dichroic prism having a wavelength selectivity appropriate for this polarizing direction can prevent the wavelength selectivity of the dichroic prism from deteriorating the projected image. It is preferable that the polarizing direction is the S-polarizing direction, because generally the S-polarized dichroic prism can be obtained more easily and at lower cost than a P-polarized one.

Also, it is preferable that the first and second phase plates are disposed corresponding with each light modulation unit, respectively, and made most suitable depending on the color light beam which impinges onto each light modulation unit. The first and second phase plates used for each of the red, green, and blue light beams are different, because each color light beam has a different wavelength. Selecting the first and second phase plates depending on the color of each light beam allows to keep the intensity of the reflected light beam coming back to the liquid crystal panel to be minimum.

Further, it is possible that the first and second phase plates are made most suitable for blue light. Using the first and second phase plates made most suitable for blue light prevents reflected blue light from re-entering a liquid crystal panel. On the one hand, the intensity of blue light is the highest among the reflected light beams because its wavelength is on the short wavelength side. On the other hand, a thin film transistor formed by polysilicon which may be included in the liquid crystal panel, tends to absorb blue light more than others. Therefore, by using phase plates made most suitable for blue light, it is possible to effectively prevent light from coming back into the liquid crystal panel which could otherwise cause an error in the function of the transistors. Further, in this case an inexpensive device can be obtained because it needs only one type of the phase plates.

Also, for the reason mentioned above, it is possible that the first and second phase plates are disposed only on the output side of the polarizing plate of the light modulation unit 3B for modulating the blue light beam.

Further, it is preferable that the first phase plate and the polarizing plate on the one hand, and the second phase plate and the light combining means on the other hand are optically stuck together because then there is no space between the light combining means and air, and the polarizing plate and air, which prevents reflected light from coming back into the liquid crystal panel.

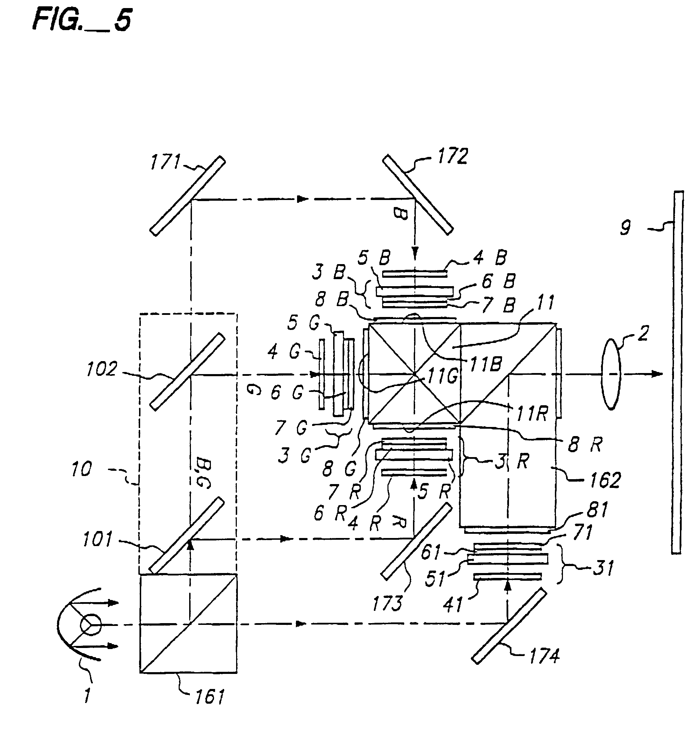

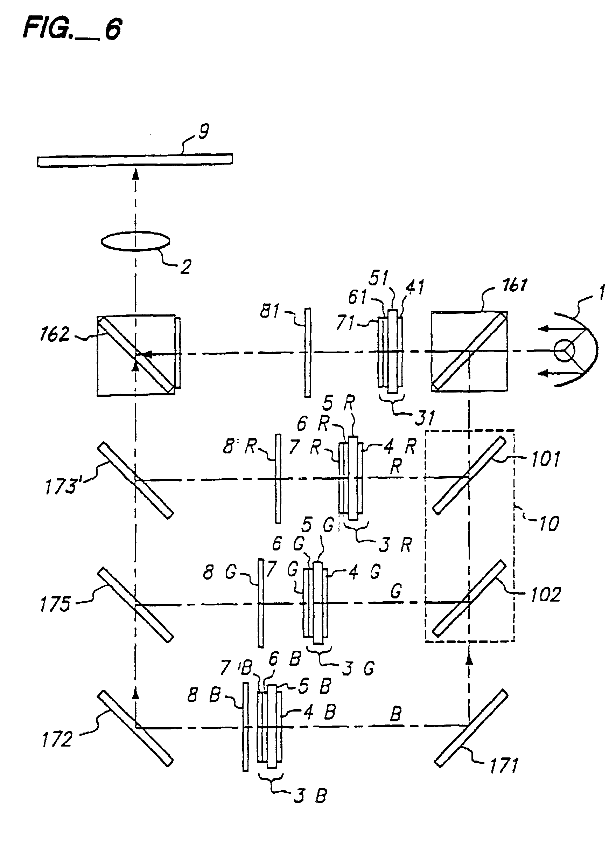

Figs. 5 and 6 show the optical system of the display device according to a third and a fourth embodiment of the invention, respectively. The third and the fourth embodiments are similar to the second embodiment in that a light beam is separated into three light beams corresponding to the three primary colors, the color beams then pass through a respective light modulation unit and first and second phase plates whereafter they are recombined to one light beam. The explanation of the second embodiment above applies to this "chrominance" part of the third and fourth embodiments in the same way and will not be repeated, therefor. As will be described in more detail later, the fourth embodiment differs from the second and third embodiments with respect to the position of the light modulation units and phase plates and the structure of the light combining system.

In addition to the second embodiment, both the third and the fourth embodiment include a "luminance" part comprising a further light separation system 161, a mirror 174, a fourth light modulation unit and a further light combining system. The separation system 161, which may be a polarizing beam splitter, is arranged to separate the light beam from the light source 1 into P- and S-polarized light components. In the third and fourth embodiments it is the S-polarized light component rather than directly the light beam emitted from the light source which is made to impinge on the separation system 10 of the chrominance part. The P-polarized light component on the other hand is deflected by the mirrors 174 to impinge on the light modulation unit 31 of the luminance part. The light modulation unit 31 comprising an input-side polarizing plate 41, a liquid crystal panel 51, and an output-side polarizing plate 61, and first and second phase plates 71 and 81 are structured and arranged in the same way as that of the chrominance part and the details will not be repeated here. The combining system 162, which may also be a polarizing beam splitter, has one end disposed on the output side of the second phase plate 81 and another end disposed on the output side of the combining system 11. The optical projection system 2 is disposed on the output-side end of the combining system 162.

Referring to Fig. 5 the light beam emitted from the light source 1 is separated into a P-polarized component and an S-polarized component by means of the separation system 161. The P-polarized component is made to impinge onto the luminance light modulation system 31 by means of the mirror 174 and is modulated in the liquid crystal panel 51 in accordance with a luminance signal. The modulated beam passes through the polarizing plate 61, the first phase plate 71 and the second phase plate 82 in this order, and becomes a linearly polarized light beam based on the effects described above using Fig. 1. This light beam is then emitted to the combining system 162. On the other hand, the S-polarized component is separated into the three color beams by means of the color separation system 10. The three color beams are treated in the same way as it has been explained for the second embodiment and are recombined by the combining system 11. The recombined color beams derived from the S-polarized light component, and the P-polarized light component emitted from the phase plate 81 are eventually recombined by the combining system 162. The recombined components are emitted to the optical projection system 2.

Light reflected at interfaces between the output side of the first phase plates 7R, 7G ,7B and 71 or the input side of the second phase plates 8R, 8G , 8B and 81 and air passes through the first phase plate 7R, 7G, 7B and 71 in the opposite direction. This reflected light is absorbed by the polarizing plates 6R, 6G, 6B and 61 and does not return back to the respective liquid crystal panel, because it is linearly polarized light whose polarizing axis is perpendicular to the light transmission axis of the respective polarizing plate 6R, 6G, 6B and 61.

In the fourth embodiment of Fig. 6 a light separation system 161' separates the light beam from the light source 1 into P- and S-polarized light components. The light modulation unit 3B and the phase plates 7B and 8B are disposed between the mirrors 171 and 172. The light modulation unit 3G and the phase plates 7G and 8G are disposed between the dichroic mirror 102 and a dichroic mirror 175. The light modulation unit 3R and the phase plates 7R and 8R are disposed between the dichroic mirror 101 and a dichroic mirror 173'. Mirror 175 combines the modulated blue light beam and the modulated green light beam and mirror 173' combines the modulated red light beam with the former two. The recombined color beams enter one side of a light combining system 162 and the modulated luminance component enters another side thereof. A composite light beam is emitted from the light combining system 162 to the projection system 2.

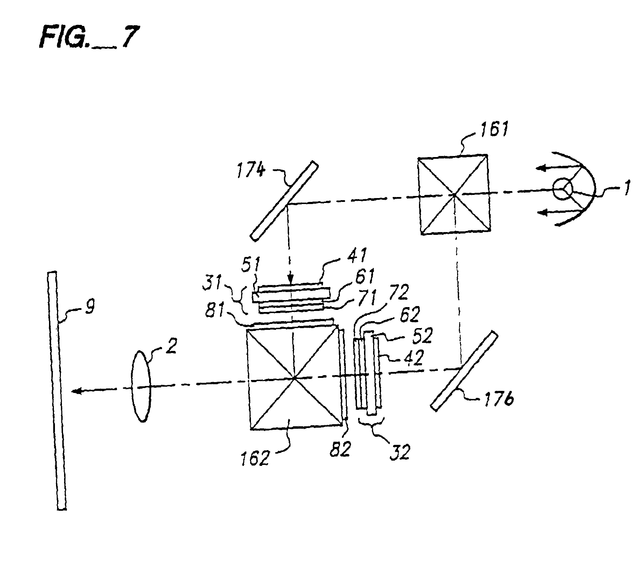

Fig. 7 shows the optical system of a display device according to a fifth embodiment of the invention. The fifth embodiment is a modification of the first embodiment adding the luminance part of the third and fourth embodiments to the first embodiment. The separation system 161, which may be a polarizing beam splitter is arranged to separate the light beam from the light source 1 into P- and S-polarized light components. A mirror 174 is disposed in the way of the P-polarized light component to deflect it to the light modulation unit 31. The (luminance) light modulation unit 31 and the phase plates 71 and 81 may be the same as those of the third or fourth embodiment. The combining system 162, which may be a polarizing beam splitter, is disposed on the output side of the second phase plate 81. On the other hand, a mirror 176 is disposed in the way of the S-polarized light component to deflect it to the (chrominance) light modulation unit 32. The structure and arrangement of the light modulation unit 32 comprising an input-side polarizing plate 42, a liquid crystal panel 52 and an output-side polarizing plate 62, and of the first and second phase plates 72 and 82 may be the same as those of the corresponding elements of the first embodiment. The polarizing plate 62 is disposed so that the direction of its light transmission axis is same as that of the S-polarized light beam. The combining system 162 is disposed on the output sides of the second phase plates 72 and 82 so as to recombine the S- and P-polarized components which have been processed in the chrominance and luminance parts, respectively. The optical projection system 2 is disposed on the output side of the combining system 162.

## Claims

1. A projection-type display device comprising:
light source means (1),
at least one light processing unit (3, 7, 8; 3R, 3B, 3G, 7R, 7B, 7G, 8R, 8B, 8G; 31, 71, 81; 32, 72, 82) including
a light modulation unit (3; 3R, 3B, 3G; 31; 32) having a liquid crystal panel (5; 5R, 5B, 5G; 51; 52) and a polarizing plate (6; 6R, 6B, 6G; 61; 62) arranged on a light output surface side of the liquid crystal panel for modulating light emitted from the light source means in accordance with a signal, and
a first phase plate (7; 7R, 7B, 7G; 71; 72) provided on the output side of said polarizing plate and adapted to convert the polarization of a linearly polarized light beam that has passed through the light modulation unit, and
projection means (2) for projecting the modulated light onto a screen (9) in an enlarged fashion,
**characterized in that**
said first phase plate (7; 7R, 7B, 7G; 71; 72) is adapted to convert said linearly polarized light beam into a circularly polarized light beam, and
said at least one light processing unit further includes a second phase plate (8; 8R, 8B, 8G; 81; 82) provided on the output side of the first phase plate for converting the circularly polarized light beam that has passed through the first phase plate into a linearly polarized light beam to be projected by said projection means, the output side of said first phase plate and the input side of said second phase plate having a gap therebetween.

2. The device according to claim 1, wherein both the first and the second phase plates (7, 8; 7R, 7B, 7G, 8R, 8B, 8G; 71, 81; 72, 82) are a λ/4 plate and the slow axis of the first phase plate is 45° offset with respect to the light transmission axis of said polarizing plate.

3. The device according to claim 2, wherein the slow axis of the second phase plate (8; 8R, 8B, 8G; 81; 82) is 90° offset with respect to the slow axis of the first phase plate (7; 7R, 7B, 7G; 71; 72).

4. The device according to any one of claims 1, 2 or 3, wherein the light modulation unit (3; 3R, 3B, 3G; 31; 32), the first phase plate (7; 7R, 7B, 7G; 71; 72), and the second phase plate (8; 8R, 8B, 8G; 81; 82) are arranged so that the light beam projected on the screen (9) is S-polarized.

5. The device according to any one of the preceding claims further comprising:
light source means (1) capable of emitting light including the three primary colors,
color separation means (10) for separating the light emitted from the light source into three color light beams,
three of said light modulation units (3R, 3B, 3G),
means (10, 171-173) for directing each of the three color light beams through a respective one of said light modulation units, and
combining means (11) for recombining the modulated color light beams for projection by said projection means,

6. The device according to claim 5, wherein said three light processing units (3R, 3B, 3G) are arranged so that the color light beams incident on said combining means (11) have the same direction of polarization.

7. The device according to claim 6, wherein the direction of polarization is that of S-polarized light.

8. The device according to claim 5,
wherein respective first and second phase plates (7R, 7B, 7G, 8R, 8B, 8G) are provided on the output side of the polarizing plate of each of said three light modulation units.

9. The device according to claim 5, wherein said first and second phase plates are provided on the output side of the polarizing plate of only the light modulation unit (3B) for modulating a blue light beam.

10. The device according to claim 8, wherein both the first and the second phase plates (7R, 7B, 7G, 8R, 8B, 8G) are optimized with respect to the respective color of the color light beam incident on the corresponding light modulation unit (3R, 3B, 3G).

11. The device according to claim 8 or 9, wherein both the first and the second phase plates are optimized with respect to the blue color.

12. The device according to any one of claims of 5 through 11, wherein said combining means (11) comprises a prism combining system.

13. The device according to any one of claims 1 to 4, further comprising:
light separation means (161) for separating white light emitted from said light source (1) into a P-polarized light component and an S-polarized light component,
first and second light processing units (31, 71, 81, 32, 72, 82),
means (174, 176) for directing one of the two components to the first and the other to the second light processing unit for modulating the two components by different video signals, such as a chrominance signal and a luminance signal, and
combining means (162) for recombining the modulated components for projection by said projection means (2).

14. The device according to any one of claims 5 to 12, further comprising:
light separation means (161) for separating white light emitted from said light source (1) into a P-polarized light component and an S-polarized light component, said light separation means being interposed between said light source means and said color separation means (10),
means (161) for directing one of the two components to said color separation means (10),
means (161, 174; 161') for directing the other component to an additional one (31, 71, 81) of said light processing units for modulating said other component by a luminance signal, and
additional combining means (162) for combining the recombined color light beams and the modulated other component for projection by said projection means (2).

## Patentansprüche

1. Projektionsanzeigevorrichtung, umfassend:
eine Lichtquellenanordnung (1),
zumindest eine Lichtverarbeitungseinheit (3, 7, 8; 3R, 3B, 3G, 7R, 7B, 7G, 8R, 8B, 8G; 31, 71, 81; 32, 72, 82), enthaltend
eine Lichtmodulationseinheit (3; 3R, 3B, 3G; 31; 32) mit einer Flüssigkristalltafel (5; 5R, 5B, 5G; 51; 52) und einer Polarisationsplatte (6; 6R, 6B, 6G; 61, 62), die auf einer Lichtausgangsflächenseite der Flüssigkristalltafel angeordnet sind, zum Modulieren von aus der Lichtquellenanordnung emittiertem Licht nach Maßgabe eines Signals, und
ein erstes Phasenplättchen (7; 7R, 7B, 7G; 71; 72), das auf der Ausgangsseite der Polarisationsplatte vorgesehen ist und so ausgebildet ist, daß es die Polarisation eines linear polarisierten Lichtstrahls, der die Lichtmodulationseinheit durchlaufen hat, abändert, und
eine Projektionsanordnung (2) zum Projizieren des modulierten Lichts in Vergrößerung auf einen Schirm (9),
**dadurch gekennzeichnet, daß**
das erste Phasenplättchen (7; 7R, 7B, 7G; 71; 72) so ausgebildet ist, daß es den linear polarisierten Lichtstrahl in einen zirkular polarisierten Lichtstrahl abändert, und
die zumindest eine Lichtverarbeitungseinheit des weiteren ein zweites Phasenplättchen (8; 8R, 8B, 8G; 81; 82) enthält, das auf der Ausgangsseite des ersten Phasenplättchens vorgesehen ist, zum Abändern des zirkular polarisierten Lichtstrahls, der das erste Phasenplättchen durchlaufen hat, in einen linear polarisierten Lichtstrahl, der von der Projektionsanordnung zu projizieren ist, wobei die Ausgangsseite des ersten Phasenplättchens und die Eingangsseite des zweiten Phasenplättchens zwischen sich einen Spalt aufweisen.

2. Vorrichtung nach Anspruch 1, bei der sowohl das erste als auch das zweite Phasenplättchen (7, 8; 7R, 7B, 7G, 8R, 8B, 8G; 71, 81; 72, 82) ein λ/4-Plättchen sind und die langsame Achse des ersten Phasenplättchens um 45° bezüglich der Lichtdurchlaßachse der Polarisationsplatte versetzt ist.

3. Vorrichtung nach Anspruch 2, bei der die langsame Achse des zweiten Phasenplättchens (8; 8R, 8B, 8G; 81; 82) um 90° bezüglich der langsamen Achse des ersten Phasenplättchens (7; 7R, 7B, 7G; 71; 72) versetzt ist.

4. Vorrichtung nach einem der Ansprüche 1, 2 oder 3, bei der die Lichtmodulationseinheit (3; 3R, 3B, 3G; 31; 32), das erste Phasenplättchen (7; 7R, 7B, 7G; 71; 72) und das zweite Phasenplättchen (8; 8R, 8B, 8G; 81; 82) so angeordnet sind, daß der auf den Schirm (9) projizierte Lichtstrahl S-polarisiert ist.

5. Vorrichtung nach einem der vorhergehenden Ansprüche, ferner umfassend:
eine Lichtquellenanordnung (1), die Licht emittieren kann, das die drei Primärfarben enthält,
eine Farbtrennanordnung (10) zum Auftrennen des von der Lichtquellenanordnung emittierten Lichts in drei Farblichtstrahlen,
drei der Lichtmodulationseinheiten (3R, 3B, 3G),
eine Anordnung (10, 171 - 173) zum Leiten jedes der drei Farblichtstrahlen durch eine jeweilige der Lichtmodulationseinheiten, und
eine Vereinigungsanordnung (11) zum Wiedervereinigen der modulierten Farblichtstrahlen für die Projektion durch die Projektionsanordnung,
wobei das erste und das zweite Phasenplättchen auf der Ausgangsseite der Polarisationsplatte zumindest einer der Lichtmodulationseinheiten vorgesehen sind.

6. Vorrichtung nach Anspruch 5, bei der die drei Lichtverarbeitungseinheiten (3R, 3B, 3G) so angeordnet sind, daß die auf die Vereinigungsanordnung (11) auftreffenden Farblichtstrahlen die gleiche Polarisationsrichtung aufweisen.

7. Vorrichtung nach Anspruch 6, bei der die Richtung der Polarisation diejenige von S-polarisiertem Licht ist.

8. Vorrichtung nach Anspruch 5, bei der jeweils ein erstes und ein zweites Phasenplättchen (7R, 7B, 7G, 8R, 8B, 8G) auf der Ausgangsseite der Polarisationsplatte jeder der drei Lichtmodulationseinheiten vorgesehen sind.

9. Vorrichtung nach Anspruch 5, bei der die ersten und zweiten Phasenplättchen auf der Ausgangsseite der Polarisationsplatte nur der Lichtmodulationseinheit (3B) zum Modulieren eines blauen Lichtstrahls vorgesehen sind.

10. Vorrichtung nach Anspruch 8, bei der sowohl das erste als auch das zweite Phasenplättchen (7R, 7B, 7G, 8R, 8B, 8G) bezüglich der jeweiligen Farbe des auf die entsprechende Lichtmodulationseinheit (3R, 3B, 3G) auftreffenden Farblichtstrahls optimiert sind.

11. Vorrichtung nach Anspruch 8 oder 9, bei der sowohl das erste als auch das zweite Phasenplättchen bezüglich der blauen Farbe optimiert sind.

12. Vorrichtung nach einem der Ansprüche 5 bis 11, bei der die Vereinigungsanordnung (11) ein Prismenvereinigungssystem umfaßt.

13. Vorrichtung nach einem der Ansprüche 1 bis 4, ferner umfassend:
eine Lichttrennanordnung (161) zum Auftrennen von aus der Lichtquellenanordnung (1) emittiertem weißem Licht in eine P-polarisierte Lichtkomponente und eine S-polarisierte Lichtkomponente,
eine erste und eine zweite Lichtverarbeitungseinheit (31, 71, 81, 32, 72, 82),
eine Anordnung (174, 176) zum Leiten einer der zwei Komponenten zur ersten und der anderen zur zweiten Lichtverarbeitungseinheit, damit die zwei Komponenten durch unterschiedliche Videosignale wie beispielsweise ein Chrominanzsignal und ein Luminanzsignal moduliert werden, und
eine Vereinigungsanordnung (162) zum Wiedervereinigen der modulierten Komponenten für die Projektion durch die Projektionsanordnung (2).

14. Vorrichtung nach einem der Ansprüche 5 bis 12, ferner umfassend:
eine Lichttrennanordnung (161) zum Auftrennen von aus der Lichtquellenanordnung (1) emittiertem weißem Licht in eine P-polarisierte Lichtkomponente und eine S-polarisierte Lichtkomponente, wobei die Lichttrennanordnung zwischen der Lichtquellenanordnung und der Farbtrennanordnung (10) angeordnet ist,
eine Anordnung (161) zum Leiten einer der zwei Komponenten zur Farbtrennanordnung (10),
eine Anordnung (161, 174; 161') zum Leiten der anderen Komponente zu einer zusätzlichen (31, 71, 81) der Lichtverarbeitungseinheiten, damit die andere Komponente durch ein Luminanzsignal moduliert wird, und
eine zusätzliche Vereinigungsanordnung (162) zum Vereinigen der wiedervereinigten Farblichtstrahlen und der modulierten anderen Komponente für die Projektion durch die Projektionsanordnung (2).

## Revendications

1. Dispositif d'affichage du type à projection comportant :
des moyens (1) formant source de lumière,
au moins une unité (3, 7, 8 ; 3R, 3B, 3G, 7R, 7B, 7G, 8R, 8B, 8G ; 31, 71, 81 ; 32, 72, 82) de traitement de la lumière comportant
une unité (3 ; 3R, 3B, 3G ; 31 ; 32) de modulation de la lumière ayant un panneau ( 5 ; 5R, 5B, 5G ; 51 ; 52) à cristaux liquides et une lame (6 ; 6R, 6B, 6G ; 61 ; 62) de polarisation disposée sur un côté de surface de sortie de la lumière du panneau à cristaux liquides pour moduler de la lumière émise des moyens formant source de lumière conformément à un signal, et
une première lame (7 ; 7R, 7B, 7G ; 71 ; 72) à différence de phase disposée sur le côté de sortie de la lame de polarisation et conçue pour convertir la polarisation d'un faisceau lumineux polarisé linéairement qui est passé par l'unité de modulation de la lumière, et
des moyens (2) de projection destinés à projeter la lumière modulée sur un écran (9) d'une manière agrandie,
**caractérisé en ce que**
la première lame (7 ; 7R, 7B, 7G ; 71 ; 72) à différence de phase est conçue pour convertir le faisceau lumineux polarisé linéairement en un faisceau lumineux polarisé circulairement, et
ladite au moins une unité de traitement de la lumière comporte en outre une seconde lame (8 ; 8R, 8B, 8G ; 81 ; 82) à différence de phase disposée sur le côté de sortie de la première lame à différence de phase pour convertir le faisceau lumineux polarisé circulairement qui est passé par la première lame à différence de phase en un faisceau lumineux polarisé linéairement pour être projeté par les moyens de projection, le côté de sortie de la première lame à différence de phase et le côté d'entrée de la seconde lame à différence de phase ayant entre eux un interstice.

2. Dispositif suivant la revendication 1, dans lequel les première et seconde lames (7, 8 ; 7R, 7B, 7G; 8R, 8B, 8G ; 71, 81; 72, 82) à différence de phase sont toutes les deux une lame quart onde et l'axe lent de la première lame à différence de phase est décalé de 45° par rapport à l'axe de transmission de la lumière de la lame de polarisation.

3. Dispositif suivant la revendication 2, dans lequel l'axe lent de la seconde lame (8; 8R, 8B, 8G ; 81 ; 82) à différence de phase est décalé de 90° par rapport à l'axe lent de la première lame (7 ; 7R, 7B, 7G ; 71 ; 72) à différence de phase.

4. Dispositif suivant l'une quelconque des revendications 1, 2 ou 3, dans lequel l'unité (3 ; 3R, 3B, 3G ; 31 ; 32) de modulation de la lumière, la première lame (7 ; 7R, 7B, 7G ; 71 ; 72) à différence de phase et la seconde lame (8 ; 8R, 8B, 8G ; 81 ; 82) à différence de phase sont agencées de sorte que le faisceau lumineux projeté sur l'écran (9) soit polarisé S.

5. Dispositif suivant l'une quelconque des revendications précédentes comportant en outre :
des moyens (1) formant source de lumière capables d'émettre de la lumière incluant les trois couleurs principales,
des moyens (10) de séparation des couleurs destinés à séparer la lumière émise provenant de la source de lumière en trois faisceaux lumineux de couleur,
trois des unités (3R, 3B, 3G) de modulation de la lumière,
des moyens (10, 171-173) pour diriger chacun des trois faisceaux lumineux de couleur dans une unité respective des unités de modulation de la lumière, et
des moyens (11) de combinaison destinés à recombiner les faisceaux lumineux de couleur modulés pour une projection par les moyens de projection,
les premières et secondes lames à différence de phase étant disposées sur le côté de sortie de la lame de polarisation d'au moins l'une des unités de modulation de la lumière.

6. Dispositif suivant la revendication 5, dans lequel les trois unités (3R, 3B, 3G) de traitement de la lumière sont disposées de sorte que les faisceaux lumineux de couleur incidents sur les moyens (11) de combinaison ont la même direction de polarisation.

7. Dispositif suivant la revendication 6, dans lequel la direction de polarisation est celle de la lumière polarisée S.

8. Dispositif suivant la revendication 5, dans lequel
des première et seconde lames (7R, 7B, 7G, 8R, 8B, 8G) à différence de phase respectives sont disposées sur le côté de sortie de la lame de polarisation de chacune des trois unités de modulation de la lumière.

9. Dispositif suivant la revendication 5, dans lequel les première et seconde lames à différence de phase sont disposées sur le côté de sortie de la lame de polarisation d'uniquement l'unité (3B) de modulation de la lumière pour une modulation du faisceau lumineux bleu.

10. Dispositif suivant la revendication 8, dans lequel les première et seconde lames (7R, 7B, 7G, 8R, 8B, 8G) à différence de phase sont toutes les deux optimisées par rapport à la couleur respective du faisceau lumineux de couleur qui est incident sur l'unité (3R, 3B, 3G) de modulation de la lumière correspondante.

11. Dispositif suivant la revendication 8 ou 9, dans lequel les première et secondes lame à différence de phase sont toutes les deux optimisées en ce qui concerne la couleur bleu.

12. Dispositif suivant l'une quelconque des revendications 5 à 11, dans lequel les moyens (11) de combinaison comportent un système de combinaison par prisme.

13. Dispositif suivant l'une quelconque des revendications 1 à 4, comportant en outre :
des moyens (161) de séparation de la lumière pour séparer de la lumière blanche émise de la source (1) de lumière en une composante de lumière polarisée P et une composante de lumière polarisée S,
des première et seconde unités (31, 71, 81, 32, 72, 82) de traitement de la lumière,
des moyens (174, 176) destinés à diriger l'une des deux composantes vers la première unité de traitement de la lumière et l'autre des composantes vers la seconde unité de traitement de la lumière pour moduler les deux composantes par différents signaux vidéo, tels qu'un signal de chrominance et un signal de luminance, et
des moyens (162) de combinaison destinés à recombiner les composantes modulées pour une projection par les moyens (2) de projection.

14. Dispositif suivant l'une quelconque des revendications 5 à 12, comportant en outre :
des moyens (161) de séparation de la lumière pour séparer de la lumière blanche émise de la source (1) de lumière en une composante de lumière polarisée P et une composante de lumière polarisée S, les moyens de séparation de la lumière étant interposés entre les moyens formant source de lumière et les moyens (10) de séparation de couleur,
des moyens (161) destinés à diriger l'une des deux composantes vers les moyens (10) de séparation des couleurs,
des moyens (161, 174 ; 161') pour diriger l'autre composante vers une unité de traitement de la lumière supplémentaire (31, 71, 81) des unités de traitement de la lumière pour moduler l'autre composante par un signal de luminance, et
des moyens (162) de combinaison supplémentaires pour combiner les faisceaux de lumière de couleur recombinés et l'autre composante modulée pour une projection par les moyens (2) de projection.
